# EUROPÄISCHE PATENTSCHRIFT

(11) **EP 2 358 573 B1**
(45) Veröffentlichungstag und Bekanntmachung des Hinweises auf die Patenterteilung: **08.06.2016**
(21) Anmeldenummer: 09783082.2
(22) Anmeldetag: 16.09.2009
(51) Int. Cl.: B60T 7/22, B62D 15/02, B60W 30/06

(54) **STEUEREINRICHTUNG UND VERFAHREN ZUR AUTOMATISCHEN FÜHRUNG EINES FAHRZEUGS**
CONTROLLER AND METHOD FOR THE AUTOMATIC GUIDING OF A VEHICLE
DISPOSITIF DE COMMANDE ET PROCÉDÉ POUR LA CONDUITE AUTOMATIQUE D'UN VÉHICULE

(30) Priorität: 28.10.2008 DE 102008043220
(43) Veröffentlichungstag der Anmeldung: 24.08.2011
(73) Patentinhaber: Robert Bosch GmbH, 70442 Stuttgart (DE)
(72) Erfinder: KOEHLER, Markus, 71636 Ludwigsburg (DE); SCHERL, Michael, 74321 Bietigheim (DE); HAUG, Matthias, 70469 Stuttgart (DE); ZIMMERMANN, Uwe, 71686 Remseck (DE)
(86) Internationale Anmeldenummer: PCT/EP2009/062007
(87) Internationale Veröffentlichungsnummer: WO 2010/049212

(56) Entgegenhaltungen:
- DE-A1- 19 922 173
- DE-A1-102006 044 803
- US-A- 5 931 252

## Beschreibung

### Stand der Technik

Die Erfindung geht aus von einer Steuereinrichtung und einem Verfahren zur automatischen Führung eines Fahrzeugs nach der Gattung der nebengeordneten Ansprüche. Aus der DE 3813083 A1 ist eine automatische Einparkeinrichtung für Kraftfahrzeuge bekannt, mittels der eine Beschleunigungseinrichtung, eine Gangschaltung und ein Bremssystem eines Fahrzeugs automatisch so gesteuert werden können, um das Fahrzeug in eine Parklücke in paralleler oder rechtwinkliger Richtung einzuparken. Zur Steuerung eines automatischen Betriebs weist die Einrichtung ein Operationstastenfeld auf, in dem eine entsprechende Einpark-Betriebsart gewählt werden kann. Ferner können an dem Operationstastenfeld auch Steuerdruckknöpfe vorgesehen sein, mit denen ein Unterbrechen oder ein Nothalt eines automatischen Einparkens ausgelöst werden können.

Aus der US 5 931 252A ist ein automatisches Lenksystem zur Durchführung unterstützter Einparkvorgänge für ein Fahrzeug bekannt. Während des automatischen Einparkvorgangs soll das Fahrzeug eine Kriechgeschwindigkeit einhalten. Der Fahrer muss dazu während des ganzen Einparkvorgangs das Bremspedal betätigen. Es wird überwacht, ob die Stellung des vom Fahrer während des automatischen Einparkvorgangs betätigten Bremspedals einer vorher festgelegten Stellung entspricht bzw. ob die aktuell vom Fahrer aufgebrachte Bremskraft einer festgelegten Bremskraft entspricht, die benötigt wird, um die Geschwindigkeit des Fahrzeugs auf Kriechgeschwindigkeit zu halten. Wird eine Abweichung erfasst, so wird eine Warnung an den Fahrer ausgegeben.

### Offenbarung der Erfindung

### Vorteile der Erfindung

Die erfindungsgemäße Steuereinrichtung zur automatischen Führung eines Fahrzeugs mit den Merkmalen des unabhängigen Anspruchs hat demgegenüber den Vorteil, dass eine automatische Führung eines Fahrzeugs dann unterbrochen wird, wenn eine Bremsbereitschaft eines Fahrers nicht mehr festgestellt wird. Entsprechend erfolgt eine automatische Führung dann oder nur dann, wenn eine Bremsbereitschaft des Fahrers ermittelt wird. Hiermit wird es ermöglicht, dass eine automatische Führung des Fahrzeugs nur dann erfolgt, wenn der Fahrer auch tatsächlich bremsbereit ist. Zwar kann durch eine Überwachungseinrichtung in einer Umgebung eines Fahrzeugs festgestellt werden, ob sich in einer Einparkbahn ein Hindernis befindet, jedoch könnte eine entsprechende Hindernis-Erfassungseinheit beispielsweise durch einen Fehler gestört sein. Ferner verbleibt die letzte Verantwortung für eine Fahrhandlung bei dem Fahrer des Fahrzeugs selbst. Erfindungsgemäß wird sichergestellt, dass sich ein Fahrer nicht blind auf das Fahrzeugsystem verlässt, sondern dass er zumindest stets eine Bremsbereitschaft signalisiert. Durch die Erfassung der Bremsbereitschaft und einen Abbruch des Einparkverfahrens für den Fall, dass der Fahrer gar nicht bremsbereit wäre, wird eine gewisse Mindestaufmerksamkeit und zumindest eine Bereitschaft zum Eingriff des Fahrers in die automatische Fahrhandlung sichergestellt. Insbesondere kann hierdurch vermieden werden, dass sich ein Fahrer vollständig auf ein automatisches System verlässt. Für den Fall, dass doch wider Erwarten einmal ein Eingreifen des Fahrers erforderlich werden sollte, kann somit sichergestellt werden, dass ein Fahrer nicht aufgrund einer fehlenden Bremsbereitschaft, beispielsweise durch eine ungünstige Stellung der Füße im Fußraum, keinen Eingriff zur Verzögerung des Fahrzeugs mehr vornehmen kann, obwohl er eine Gefahr vielleicht sogar erkannt hätte. Erfindungsgemäß wird die Bremsbereitschaft des Fahrers festgestellt, wenn sich zumindest ein Fuß des Fahrers in einem Raumbereich oberhalb des Bremspedals befindet, um sogleich bei Bedarf das Bremspedal betätigen zu können. Hiermit wird sichergestellt, dass ein Fahrer physisch in der Lage ist, innerhalb seiner Reaktionszeit auf mögliche Hindernisse zu reagieren und das automatische Fahren zu unterbrechen oder abzubrechen.

Entsprechende Vorteile ergeben sich auch für ein erfindungsgemäßes Verfahren zur automatischen Führung eines Fahrzeugs, bei dem eine automatische Führung dann unterbrochen wird, wenn eine Bremsbereitschaft eines Fahrers nicht mehr festgestellt wird.

Durch die in den abhängigen Ansprüchen aufgeführten Maßnahmen sind vorteilhafte Weiterbildungen und Verbesserungen der in dem unabhängigen Anspruch angegebenen Steuereinrichtung und des in dem unabhängigen Anspruch angegebenen Verfahrens möglich. So ist es vorteilhaft, für den Fall, dass eine Bremsbereitschaft des Fahrers nicht festgestellt wird und eine automatische Führung des Fahrzeugs unterbrochen wird, zusätzlich das Fahrzeug automatisch verzögert wird. Hierdurch kann verhindert werden, dass das Fahrzeug bei einem Abbruch einer automatischen Führung des Fahrzeugs quasi ungesteuert auf ein Hindernis auffährt.

Weiterhin ist es vorteilhaft, eine Bremsbereitschaft des Fahrers dann festzustellen, wenn das Bremspedal berührt wird.

Es ist weiterhin vorteilhaft, die Unterbrechung der automatischen Führung nicht bereits dann vorzunehmen, wenn für einen sehr kurzen Zeitraum eine Bremsbereitschaft des Fahrers nicht festgestellt wird. Wird beispielsweise ein Fuß des Fahrers auf dem Bremspedal festgestellt und lässt der Fahrer das Bremspedal nur leicht los, könnte bereits hierdurch das automatische Fahren unterbrochen oder abgebrochen werden. Vorteilhaft wird jedoch für eine Unterbrechung oder einen Abbruch des automatischen Fahrens ein Mindestzeitraum einer unterbrochenen Bremsbereitschaft von beispielsweise einer Sekunde vorausgesetzt. Hierdurch wird ein unnötiges Unterbrechen oder Abbrechen der automatischen Führung des Fahrzeugs vermieden.

Es ist ferner vorteilhaft, eine Schnittstelle zu einer Warneinrichtung vorzusehen, um einem Fahrer eine Warnung dann auszugeben, wenn eine Bremsbereitschaft des Fahrers nicht festgestellt wird. Der Fahrer kann hierdurch derart reagieren, dass er eine Bremsbereitschaft wieder herstellt und das automatische Führen des Fahrzeugs, gegebenenfalls sogar ohne eine Unterbrechung, fortgesetzt werden kann.

Die Verwendung einer Steuereinrichtung mit einer entsprechenden Überwachung einer Bremsbereitschaft ist insbesondere in einem Einparksystem für ein Fahrzeug vorteilhaft. Denn eine automatische Führung des Fahrzeugs ist bei einem im Allgemeinen langsam durchgeführten Einparkverfahren besonders gut realisierbar. Zudem ist eine automatische Führung bei einem Einparkvorgang für einen Fahrer komfortabel, da gerade eine Einparksituation zumeist recht hohe Anforderungen an die Einschätzung einer Fahrsituation durch den Fahrer stellt. Mit einer erfindungsgemäßen Ausgestaltung wird bei einer automatischen Durchführung eines Einparkverfahrens jedoch sichergestellt, dass ein Fahrer dennoch den Fahrweg des Fahrzeugs überwacht und gegebenenfalls bereit ist, in die automatische Führung des Fahrzeugs möglichst unmittelbar einzugreifen.

Weiterhin ist es vorteilhaft, eine Einrichtung zur Überwachung einer Bremsbereitschaft des Fahrers zu überprüfen, beispielsweise bei einer Initialisierung der Steuereinrichtung zur automatischen Führung des Fahrzeugs. Wird eine Fehlfunktion der Einrichtung zur Überwachung einer Bremsbereitschaft des Fahrers festgestellt, so erhält ein Fahrer zumindest eine Warnung darüber, dass eine Überwachung seiner Bremsbereitschaft während einer Durchführung des automatischen Einsparkvorgangs nicht sichergestellt werden kann. In einer weiteren Ausführungsform ist es auch möglich, in diesem Fall eine automatische Führung vollständig zu unterbinden.

Weiterhin ist es vorteilhaft, eine Überwachung einer Bremsbereitschaft erst nach einer vorgegebenen Zeitdauer, beispielsweise von zwei Sekunden, nach einem Beginn einer automatischen Führung des Fahrzeugs einzusetzen. Je nach einer Ausführungsform eines Einparksystems für eine automatische Führung des Fahrzeugs kann es beispielsweise erforderlich sein, das Einparksystem durch eine Betätigung eines Gaspedals des Fahrzeugs zu starten. In diesem Fall muss einem Fahrer zunächst die Möglichkeit gegeben werden, seinen Fuß von dem Gaspedal auf das Bremspedal oder in einen Raum oberhalb des Bremspedals zu wechseln, um eine Bremsbereitschaft herzustellen. Indem das Einsetzen der Überwachung der Bremsbereitschaft zeitlich verzögert wird, wird ein unnötiges Unterbrechen des automatischen Einparkvorgangs zu Beginn des Einparkvorgangs vermieden.

### Kurze Beschreibung der Zeichnungen

Ausführungsbeispiele der Erfindung sind in den Zeichnungen dargestellt und in der nachfolgenden Beschreibung näher erläutert. Es zeigen Figur 1 eine schematische Darstellung eines Fahrzeugs mit einer erfindungsgemäßen Steuereinrichtung in einer Draufsicht, Figuren 2 und 3 Darstellungen eines Bremspedals für die Durchführung des erfindungsgemäßen Verfahrens in verschiedenen Ausführungsformen, Figur 4 ein Ausführungsbeispiel für einen erfindungsgemäßen Verfahrensablauf.

### Ausführungsformen der Erfindung

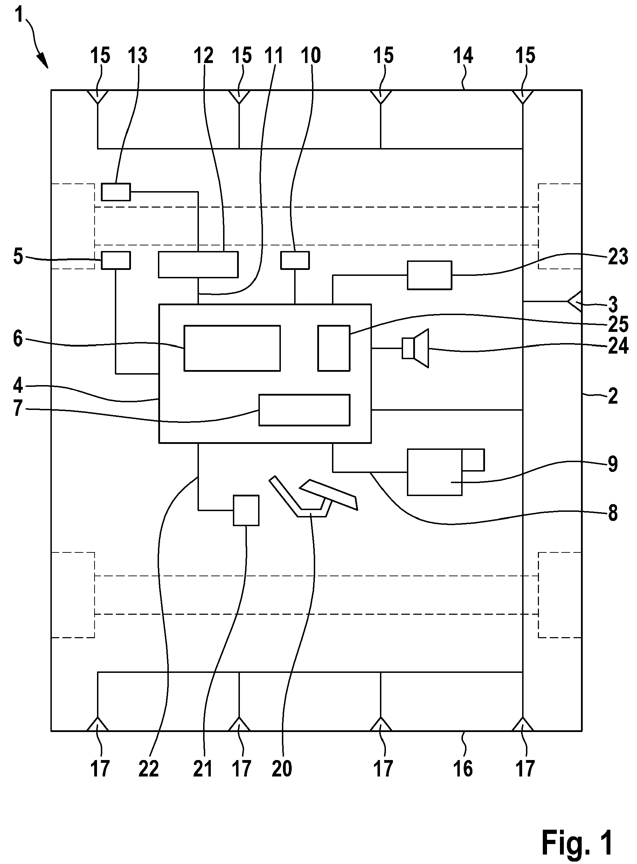

In der Figur 1 ist ein Fahrzeug 1 dargestellt, bei dem ein an einer rechten Fahrzeugsseite 2 vorgesehener Abstandssensor 3 bei einer Vorbeifahrt einen Abstand zu seitlichen Hindernissen misst. Die Messungen werden von einer Steuereinrichtung 4 ausgewertet und in Relation zu einer zurückgelegten Wegstrecke gesetzt, die über einen Wegstreckensensor 5 festgestellt wird. Der Wegstreckensensor 5 ist beispielsweise als ein Raddrehzahlsensor ausgeführt. Hierdurch ist es möglich, eine Umgebung des Fahrzeugs an der rechten Fahrzeugseite 2 zu erfassen. Entsprechend wäre auch eine vergleichbare Messung an der linken Fahrzeugseite möglich.

Zur Auswertung weist die Steuereinrichtung 4 eine Recheneinheit 6 auf, die ausgehend von der aktuellen Fahrzeugposition einen Einparkweg des Fahrzeugs 1 in eine Parklücke bestimmt, die für das Fahrzeug 1 als ausreichend groß bewertet wird. Hierzu greift die Recheneinheit 6 auf eine Speichereinheit 7 der Steuereinrichtung 4 zurück, in der unter anderem die Fahrzeugabmaße gespeichert sind. Die Steuereinrichtung 4 ist ferner dazu ausgelegt, das Fahrzeug 1 entlang der vorberechneten Einparkbahn automatisch in die Parklücke zu führen. Hierzu ist die Steuereinrichtung 4 mit einer Schnittstelle 8 zu einem Fahrzeugantrieb 9 ausgestattet, um eine Beschleunigung des Fahrzeugs zu veranlassen. Ferner ist die Steuereinrichtung 4 mit einer Lenkeinrichtung 10 verbunden, mit der eine Fahrzeuglenkung eingestellt werden kann. Desweiteren ist die Steuereinrichtung 4 mit einer Schnittstelle 11 zu einer Bremsensteuereinrichtung 12 verbunden. Die Bremsensteuereinrichtung 12 dient dazu, Fahrzeugbremsen 13 anzusteuern, um das Fahrzeug gegebenenfalls zu verzögern.

Um Hindernisse in einer Umgebung des Fahrzeugs zu erfassen, sind an die Steuereinrichtung 4 ferner an einer Fahrzeugvorderseite 14 vorgesehene Abstandssensoren 15 und an der Fahrzeugrückseite 16 Abstandssensoren 17 vorgesehen, die entsprechend dem Abstandssensor 3 beispielsweise als Ultraschallsensoren, als Radarsensoren oder als optische Sensoren ausgeführt sind. Erfassen die Sensoren 15, 17 ein Hindernis in einer jeweiligen Fahrtrichtung des Fahrzeugs, so veranlasst die Recheneinheit 6 durch einen Zugriff auf die Bremsensteuereinrichtung 12 eine Verzögerung des Fahrzeugs 1.

Zur Verzögerung des Fahrzeugs ist eine Bremsbedieneinrichtung vorgesehen, die beispielsweise als ein Bremspedal 20 ausgeführt ist. Während des Ablaufs der automatischen Führung des Fahrzeugs kann zudem die automatische Führung durch einen Tritt auf ein Bremspedal 20 durch den Fahrer selbst jederzeit unterbrochen oder auch, beispielsweise bei einem längeren Tritt auf das Bremspedal 20, vollständig abgebrochen werden.

Während des automatischen Fahrvorgangs wird das Fahrzeug von der Steuereinrichtung 4 selbstständig geführt. Durch die Überwachung des Fahrweges durch die Sensoren 15, 17 wird im Allgemeinen sichergestellt, dass das Fahrzeug nicht mit einem Hindernis kollidieren kann. Dennoch trägt der Fahrer die Verantwortung für den Fahrvorgang. Um sicherzustellen, dass der Fahrer bereit ist, auf ein mögliches Hindernis zu reagieren, ist eine Überwachungseinheit 21 vorgesehen. Die Überwachungseinheit 21 ist dazu ausgelegt, festzustellen, ob ein Fahrer bereit ist, das Bremspedal 20 zu treten. Die Überwachungseinheit 21 kann beispielsweise eine Berührung des Bremspedals 20 durch den Fahrer erfassen. Ferner ist es auch möglich, ein Vorhandensein eines Fußes des Fahrers in einem Raum oberhalb des Bremspedals 20 zu detektieren. Wird auf diese Weise eine Bremsbereitschaft des Fahrers ermittelt, so wird eine automatische Führung des Fahrzeugs fortgeführt. Wird eine Bremsbereitschaft des Fahrers nicht festgestellt, so wird die automatische Führung des Fahrzeugs zumindest unterbrochen, gegebenenfalls, beispielsweise nach einer fortlaufenden, fehlenden erfassten Bremsbereitschaft des Fahrers, auch vollständig abgebrochen. Die Steuereinrichtung 4 greift zur Erfassung einer Bremsbereitschaft über eine Schnittstelle 22 auf die Überwachungseinheit 21 zu.

Mit einer weiteren Ausführungsform ist es auch möglich, dass die Steuereinrichtung für den Fall, dass zuvor eine Bremsbereitschaft festgestellt wurde und nun eine Bremsbereitschaft nicht mehr festgestellt wird, eine akustische und/oder optische Warnung ausgibt. Hierzu ist die Steuereinrichtung beispielsweise mit einer Anzeige 23 und/oder einem Lautsprecher 24 verbunden.

In einer weiteren Ausführungsform erfolgt eine Unterbrechung der automatischen Führung des Fahrzeugs nicht sofort, wenn eine fehlende Bremsbereitschaft des Fahrers festgestellt wird, sondern mit einem Zeitverzug. Hierzu weist die Steuereinrichtung 4 eine Zeitmesseinrichtung 25 auf, mittels der diejenige Zeit ermittelt wird, für die eine Bremsbereitschaft des Fahrers nicht festgestellt wird. Überschreitet diese ermittelte Zeit eine vorgegebene Zeitdauer von beispielsweise einer Sekunde, so wird die automatische Führung des Fahrzeugs unterbrochen.

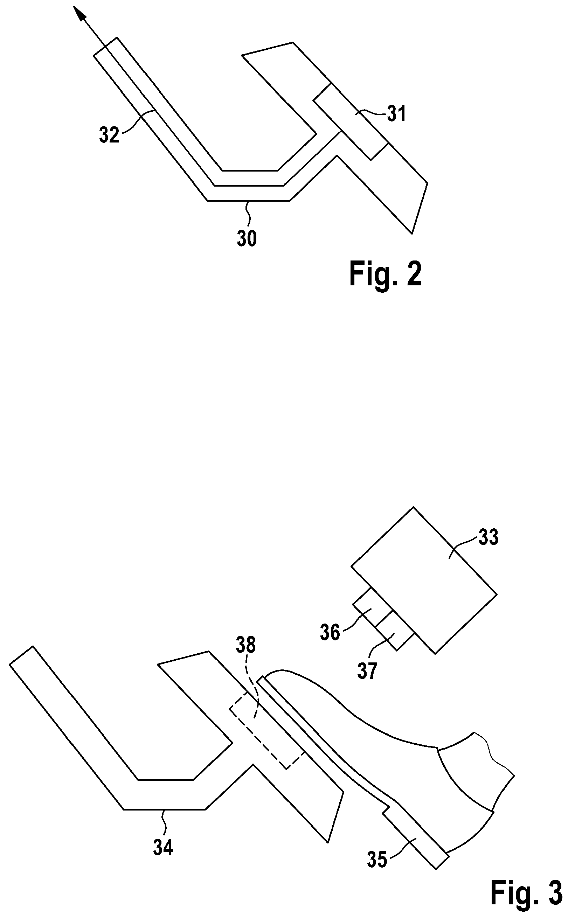

Ein erstes Ausführungsbeispiel für eine Detektion einer Bremsbereitschaft des Fahrers ist in der Figur 2 dargestellt. In einem Bremspedal 30 ist ein Berührungssensor 31 angeordnet, der eine Berührung des Bremspedals 30 durch einen Fuß eines Fahrers erfasst. Über eine Auswerteleitung 32 wird diese Information an die Steuereinrichtung 4 übermittelt. Der Berührungssensor 31 kann beispielsweise als ein elektrischer Druckschalter ausgeführt sein, beispielsweise als ein Folienschalter. Wird das Bremspedal 30 berührt, so wird eine Bremsbereitschaft des Fahrers festgestellt. Wird das Bremspedal 30 nicht berührt, so wird festgestellt, dass keine Bremsbereitschaft des Fahrers vorliegt. In einer weiteren Ausführungsform ist es auch möglich, über einen kapazitiven Näherungssensor eine Berührung oder eine dem gleichzusetzende zumindest sehr nahe Annäherung des Fußes des Fahrers an das Bremspedal 30 zu erfassen.

In der Figur 3 ist eine alternative Ausführungsform für eine Erfassung einer Bremsbereitschaft eines Fahrers dargestellt. Eine optische Sensoreinheit 33 beobachtet dabei das Bremspedal 34. Befindet sich ein Fuß 35 eines Fahrers zwischen der optischen Sensoreinheit 33 und dem Bremspedal 34, so wird eine Bremsbereitschaft eines Fahrers festgestellt. Wird ein Fuß 35 zwischen dem Bremspedal 34 und der optischen Sensoreinheit 33 von der optischen Sensoreinheit 33 nicht erfasst, so wird festgestellt, dass keine Bremsbereitschaft eines Fahrers vorliegt.

In einer ersten Ausführungsform kann die optische Sensoreinheit 33 hierzu als eine Entfernungsmessungs-Sensoreinheit ausführt sein, die beispielsweise in einem Infrarotwellenbereich arbeitet. Der Abstand zwischen der optischen Sensoreinheit 33 und dem Bremspedal 34 ist bekannt. Wird ein Objekt zwischen der optischen Sensoreinheit 33 und dem Bremspedal 34 ermittelt, so wird dieses Objekt als ein Fuß des Fahrers angenommen.

In einer weiteren Ausführungsform kann die optische Sensoreinheit 33 auch als eine Video-Sensoreinheit ausgeführt sein, die ein Bild des Bremspedals 34 aufnimmt und auswertet, um aus einer Veränderung der aufgenommenen Bilddaten das Einbringen eines Objektes, wie beispielsweise den Fuß 35 des Fahrers, zu ermitteln und damit eine Bremsbereitschaft des Fahrers festzustellen. Hierzu weist die optische Sensoreinheit in einer Ausführungsform eine Infrarot-Beleuchtungseinheit 36 und eine Kameraeinrichtung 37 auf.

In einer weiteren Ausführungsform ist es auch möglich, eine Lichtschrankeneinheit zu verwenden. Hierzu wird von einer Lichtquelle 36 eine optische Strahlung, vorzugsweise in einem Infrarotwellenbereich, in Richtung des Bremspedals 34 ausgesendet. An dem Bremspedal 34 ist wiederum eine optische Empfangseinheit 38 angeordnet, die die von der Sendeeinheit 36 ausgestrahlte optische Strahlung nur dann empfängt, wenn sich der Fuß 35 nicht zwischen dem Bremspedal 34 und der Strahlungseinheit 36 befindet. Wird ein Signal also empfangen, wird keine Bremsbereitschaft des Fahrers festgestellt. Die Anordnung von optischer Sendeeinheit und Empfangseinheit kann entsprechend auch vertauscht werden.

In weiteren Ausführungsformen können statt der hier gezeigten Detektionsmittel auch andere Erfassungsmittel zur Erfassung des Fußes in einem Raumbereich oberhalb des Bremspedals bzw. auf dem Bremspedal verwendet werden, beispielsweise ein Ultraschallsensor.

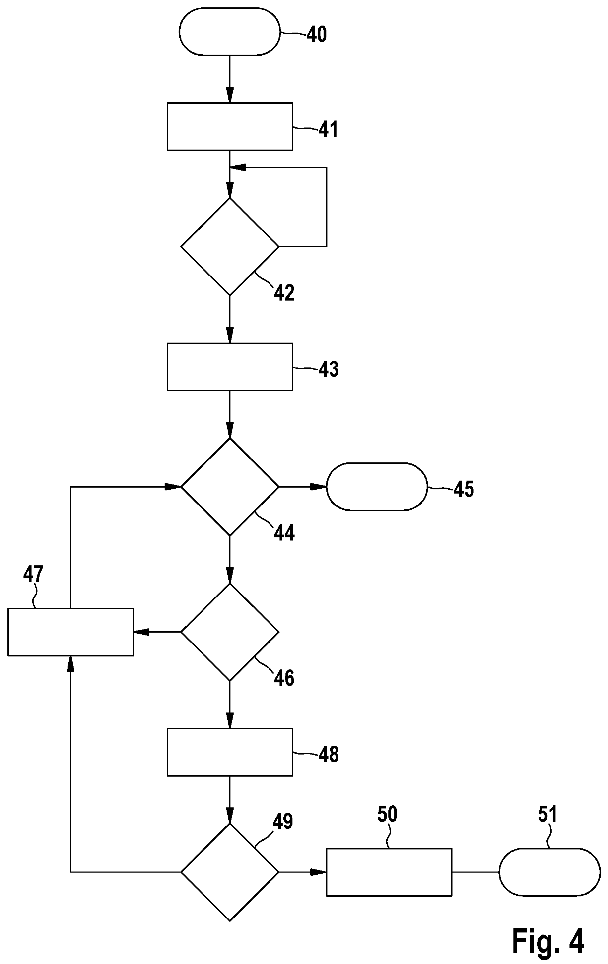

In der Figur 4 ist ein Ausführungsbeispiel für einen erfindungsgemäßen Verfahrensablauf gezeigt. Ausgehend von einem Initialisierungsschritt 40 wird ein automatisches Einparkverfahren eingeleitet. In einem anschließenden Berechnungsschritt 41 berechnet die Recheneinheit 6 einen Einparkweg von der aktuellen Position des Fahrzeugs in die Parklücke. In einem anschließenden ersten Prüfschritt 42 wird abgefragt, ob der Fahrer einen Start eines Einparkverfahrens wünscht. Der Beginn des Einparkverfahrens kann beispielsweise über eine Betätigung eines dafür vorgesehenen Bedienelements, beispielsweise des Gaspedals des Fahrzeugs oder einer gesonderten Drucktaste, ausgelöst werden. Hat der Fahrer das Einparkverfahren noch nicht gestartet, so wird zu dem ersten Prüfschritt 42 zurückverzweigt. Andernfalls wird zu einem Startschritt 43 verzweigt, mit dem das Fahrzeug automatisch in Bewegung gesetzt wird. In einem anschließenden zweiten Prüfschritt 44 wird geprüft, ob die Ziel-Parkposition bereits erreicht wurde. Falls dies so ist, so wird zu einem Endschritt 45 verzweigt und das Einparkverfahren wird beendet. Wurde die Ziel-Parkposition noch nicht erreicht, so wird zu einem dritten Prüfschritt 46 weiterverzweigt. In dem dritten Prüfschritt 46 wird geprüft, ob eine Bremsbereitschaft des Fahrers vorliegt. Hierzu wird beispielsweise überprüft, ob das Bremspedal berührt wird. Alternativ oder ergänzend kann auch geprüft werden, ob sich ein Fuß eines Fahrers oberhalb des Bremspedals befindet. Wird eine Bremsbereitschaft des Fahrers festgestellt, so wird zu dem Führungsschritt 47 weiterverzweigt und das Fahrzeug wird entlang des vorberechneten Fahrwegs zu der Zielparkposition geführt. Von dem Führungsschritt 47 wird zu dem zweiten Prüfschritt 44 zurückverzweigt. Wird in dem dritten Prüfschritt 46 dagegen festgestellt, dass eine Bremsbereitschaft des Fahrers nicht festgestellt werden kann, so wird zu einem Warnschritt 48 verzweigt. In dem Warnschritt 48 wird eine akustische und/oder optische Warnung an den Fahrer ausgegeben. Ferner wird ein Zeitglied hochgezählt. Anschließend wird zu einem vierten Prüfschritt 49 verzweigt. In dem vierten Prüfschritt 49 wird überprüft, ob das in dem Warnschritt 48 hochgezählte Zeitglied einen Zähler überschreitet. Ist dies nicht der Fall, so wird zunächst zu dem Führungsschritt 47 verzweigt und die Führung des Fahrzeugs wird zunächst fortgeführt. Wird der Zähler in dem Zeitglied in dem vierten Prüfschritt 49 jedoch überschritten, so wird bereits seit mehr als einer vorgegebenen Zeitdauer eine Bremsbereitschaft des Fahrers nicht mehr festgestellt. Daher wird zu einem Abbruchschritt 50 verzweigt, in dem die automatischen Führung des Fahrzeugs abgebrochen oder zumindest unterbrochen wird. In einer Ausführungsform wird zudem ein Fahrer akustisch und/oder optisch darauf hingewiesen, dass eine automatische Führung des Fahrzeugs nunmehr unterbleibt. In einer weiteren Ausführungsform kann in dem Abbruchschritt 50 auch eine automatische Bremsung des Fahrzeugs veranlasst werden. Anschließend wird das Verfahren mit einem Endschritt 51 beendet.

## Patentansprüche

1. Steuereinrichtung (4) zur automatischen Führung eines Fahrzeugs insbesondere bei einem Einparkvorgang mit einer Schnittstelle (22) zu einer Überwachungseinheit (21) einer Bremsbedieneinrichtung (20) des Fahrzeugs zur Ermittlung einer Bremsbereitschaft des Fahrers derart, dass eine automatische Führung des Fahrzeugs unterbrochen wird, wenn eine Bremsbereitschaft eines Fahrers nicht festgestellt wird **dadurch gekennzeichnet, dass** eine Bremsbereitschaft dann festgestellt wird, wenn sich ein Fuß des Fahrers in einem Raumbereich oberhalb des Bremspedals (20) befindet.

2. Steuereinrichtung nach Anspruch 1, **gekennzeichnet durch** eine Schnittstelle (11) zu einer Verzögerungseinrichtung (12, 13) des Fahrzeugs zur automatischen Verzögerung des Fahrzeugs bei einer Unterbrechung einer automatischen Führung des Fahrzeugs.

3. Steuereinrichtung nach einem der vorhergehenden Ansprüche, **dadurch gekennzeichnet, dass** eine Bremsbereitschaft dann festgestellt wird, wenn ein Bremspedal (20) des Fahrzeugs berührt wird.

4. Steuereinrichtung nach einem der vorhergehenden Ansprüche, **gekennzeichnet durch** eine Zeitmesseinrichtung (25) zur Messung der Zeitdauer, für die eine Bremsbereitschaft des Fahrers nicht festgestellt wird, wobei eine Unterbrechung der automatischen Führung des Fahrzeugs erst dann erfolgt, wenn die gemessene Zeitdauer eine vorgegebene Zeitdauer überschreitet.

5. Steuereinrichtung nach einem der vorhergehenden Ansprüche, **gekennzeichnet durch** eine Schnittstelle zu einer Warneinrichtung zur Ausgabe einer Warnung für den Fall, das eine Bremsbereitschaft des Fahrers nicht festgestellt wird.

6. Einparksystem für ein Fahrzeug mit einer Umfelderfassungseinrichtung zur Ermittlung einer Parklücke, mit einer Wegmesseinrichtung zur Bestimmung einer Position des Fahrzeugs gegenüber einer Parklücke, mit einer Steuereinrichtung (4) nach einem der vorhergehenden Ansprüche und mit einer Einrichtung (21) zur Überwachung einer Berührung eines Bremspedals oder zur Erfassung einer Positionierung eines Fußes in einen Raumbereich oberhalb des Bremspedals zur Ermittlung einer Bremsbereitschaft des Fahrers.

7. Verfahren zur automatischen Führung eines Fahrzeugs insbesondere bei einem Einparkvorgang, wobei eine Bremsbedieneinrichtung des Fahrzeugs zur Ermittlung einer Bremsbereitschaft des Fahrers derart überwacht wird, dass eine automatische Führung des Fahrzeugs unterbrochen wird, wenn eine Bremsbereitschaft eines Fahrers nicht festgestellt wird **dadurch gekennzeichnet, dass** eine Bremsbereitschaft dann festgestellt wird, wenn sich ein Fuß des Fahrers in einem Raumbereich oberhalb des Bremspedals (20) befindet.

8. Verfahren nach Anspruch 7, **dadurch gekennzeichnet, dass** bei einem Beginn einer automatischen Führung des Fahrzeugs eine Funktion einer Einrichtung zur Überwachung einer Bremsbereitschaft des Fahrers überprüft wird und dass bei einer Fehlfunktion der Einrichtung zur Überwachung einer Bremsbereitschaft des Fahrers eine Warnung ausgegeben wird.

9. Verfahren nach einem der Ansprüche 7-8, **dadurch gekennzeichnet, dass** eine Ermittlung einer Bremsbereitschaft des Fahrers erst eine vorgegebene Zeitdauer nach einem Beginn der automatischen Führung des Fahrzeugs einsetzt.

## Claims

1. Control device (4) for automatically guiding a vehicle, in particular during a parking process, having an interface (22) to a monitoring unit (21) of a brake operation control device (20) of the vehicle for determining readiness of the driver to brake in such a way that automatic guidance of the vehicle is interrupted if the readiness of a driver to brake is not detected, **characterized in that** a readiness to brake is detected when a foot of the driver is located in a spatial area above the brake pedal (20).

2. Control device according to Claim 1, **characterized by** an interface (11) to a deceleration device (12, 13) of the vehicle for automatically decelerating the vehicle when automatic guidance of the vehicle is interrupted.

3. Control device according to one of the preceding claims, **characterized in that** readiness to brake is detected when the brake pedal (20) of the vehicle is touched.

4. Control device according to one of the preceding claims, **characterized by** a time-metering device (25) for metering the period of time for which readiness of the driver to brake is not detected, wherein the automatic guidance of the vehicle is interrupted only if the measured time period exceeds a predefined time period.

5. Control device according to one of the preceding claims, **characterized by** an interface to a warning device for outputting a warning in the event of readiness of the driver to brake not being detected.

6. Parking system for a vehicle having a surroundings detecting device for determining a parking space, having a distance-measuring device for determining a position of the vehicle with respect to a parking space, having a control device (4) according to one of the preceding claims and having a device (21) for monitoring contact of a brake pedal or for detecting the positioning of a foot in a spatial area above the brake pedal in order to determine readiness of the driver to brake.

7. Method for automatically guiding a vehicle, in particular during a parking process, wherein a brake operator control device of the vehicle is monitored in order to determine readiness of the driver to brake in such a way that automatic guidance of the vehicle is interrupted if readiness of the driver to brake is not detected, **characterized in that** the readiness to brake is detected when a foot of the driver is located in a spatial area above the brake pedal (20).

8. Method according to Claim 7, **characterized in that** at the start of automatic guidance of the vehicle, a function of a device for monitoring the readiness of the driver to brake is checked, and **in that** in the event of a malfunction of the device for monitoring readiness of the driver to brake a warning is output.

9. Method according to one of Claims 7-8, **characterized in that** the readiness of the driver to brake does not start to be determined until after a predefined time period after the start of the automatic guidance of the vehicle.

## Revendications

1. Dispositif de contrôle (4) destiné au guidage automatique d'un véhicule, notamment lors d'une manoeuvre d'entrée en stationnement, comprenant une interface (22) vers une unité de surveillance (21) d'un dispositif de commande de frein (20) du véhicule destiné à déterminer une aptitude à freiner du conducteur de telle sorte qu'un guidage automatique du véhicule est interrompu lorsqu'une aptitude à freiner du conducteur n'est pas constatée, **caractérisé en ce qu'**une aptitude à freiner est constatée lorsqu'un pied du conducteur se trouve dans une zone d'espace au-dessus de la pédale de frein (20).

2. Dispositif de contrôle selon la revendication 1, **caractérisé par** une interface (11) vers un dispositif de ralentissement (12, 13) du véhicule destiné au ralentissement automatique du véhicule en cas d'interruption d'un guidage automatique du véhicule.

3. Dispositif de contrôle selon l'une des revendications précédentes, **caractérisé en ce qu'**une aptitude à freiner est constatée lorsqu'une pédale de frein (20) du véhicule est touchée.

4. Dispositif de contrôle selon l'une des revendications précédentes, **caractérisé par** un dispositif de mesure du temps (25) destiné à mesurer la durée pendant laquelle une aptitude à freiner du conducteur n'est pas constatée, une interruption du guidage automatique du véhicule n'ayant alors lieu que si la durée mesurée devient supérieure à une durée prédéfinie.

5. Dispositif de contrôle selon l'une des revendications précédentes, **caractérisé par** une interface vers un dispositif d'alerte destiné à délivrer une alerte dans le cas où une aptitude à freiner du conducteur n'est pas constatée.

6. Système d'entrée en stationnement pour un véhicule comprenant un dispositif de balayage de l'environnement destiné à déterminer un créneau de stationnement, comprenant un dispositif de mesure de course destiné à déterminer une position du véhicule par rapport à un créneau de stationnement, comprenant un dispositif de contrôle (4) selon l'une des revendications précédentes et comprenant un dispositif (21) destiné à la surveillance d'un contact avec une pédale du frein ou à capter un positionnement d'un pied dans une zone d'espace au-dessus de la pédale de frein en vue de déterminer une aptitude à freiner du conducteur.

7. Procédé de guidage automatique d'un véhicule, notamment lors d'une manoeuvre d'entrée en stationnement, un dispositif de commande de frein du véhicule destiné à déterminer une aptitude à freiner du conducteur étant surveillé de telle sorte qu'un guidage automatique du véhicule est interrompu lorsqu'une aptitude à freiner du conducteur n'est pas constatée, **caractérisé en ce qu'**une aptitude à freiner est constatée lorsqu'un pied du conducteur se trouvé dans une zone d'espace au-dessus de la pédale de frein (20).

8. Procédé selon la revendication 7, **caractérisé en ce que** lors d'un début d'un guidage automatique du véhicule, un fonctionnement d'un dispositif destiné à la surveillance d'une aptitude à freiner du conducteur est contrôlée, et **en ce qu'**une alerte est délivrée en cas de défaut de fonctionnement du dispositif destiné à la surveillance d'une aptitude à freiner du conducteur.

9. Procédé selon l'une des revendications 7 et 8, **caractérisé en ce qu'**une détermination d'une aptitude à freiner du conducteur n'utilise qu'une durée prédéfinie après un début du guidage automatique du véhicule.
